# EUROPEAN PATENT SPECIFICATION

(11) **EP 1 737 160 B1**
(45) Date of publication and mention of the grant of the patent: **14.08.2013**
(21) Application number: 05291333.2
(22) Date of filing: 21.06.2005
(51) Int. Cl.: H04W 99/00

(54) **Method for predicting access points along a travel route**
Verfahren zur Vorhersage von Zugangspunkten entlang einer Reiseroute
Méthode de prédiction des points d'accès le long d'un itinéraire routier

(43) Date of publication of application: 27.12.2006
(73) Proprietor: Alcatel Lucent, 75007 Paris (FR)
(72) Inventor: Blume, Oliver, Dr., 70499 Stuttgart (DE); Ambrosy, Anton, Dr., 75233 Tiefenbronn (DE)
(74) Representative: Wetzel, Emmanuelle

(56) References cited:
- EP-A- 1 085 696
- EP-A- 1 549 096
- WO-A2-2005/020602
- US-A1- 2003 007 467
- US-A1- 2004 203 779
- US-B1- 6 188 905

## Description

### Field of the invention

The invention relates to a method by which a wireless communication system provides a service for a mobile terminal which moves from place to place. More particularly, it relates to the provision of a service by means of a push and store approach.

### Background and prior art

The progress in wireless transmission technology has lead to the evolution of different transmission standards with different capabilities. GSM (Global System for Mobile Communications) is a telecommunication standard being used in more than 200 countries. It often covers the whole country geographically and provides modest transfer rates. It is commonly used for the communication of mobile phones.

Nowadays UMTS (Univeral Mobile Telecommunication Standard) systems compete with GSM systems and offer new functions and new possibilities. A major advantage of UMTS systems is their higher transfer rate. However, not even industrialized countries are completely covered by UMTS systems. As an example, only roughly 25% of the German population had the possibility to access an UMTS system at the end of 2003.

WLAN systems according to IEEE 802.11 standards are generally known. WLAN systems provide even higher transfer rates in comparison to UMTS systems. However, the coverage area of a WLAN access point, generally referred to as a hot spot, is particularly small. The radius of such a coverage area is in most cases smaller than 300 meters. Even when several hot spots may be clustered, generally referred to as a hot zone, it cannot be expected that users will have a WLAN access all over the country for the next couple of years even in industrialized countries.

Multimedia applications such as audio/video applications, video-on-demand and the like are particularly attractive for the mass market and provide a considerable economic potential. The delivery of video streams however requires a broadband transmission in order to ensure that the visual perception is not disturbed or interrupted by an insufficient transfer rate. This is the reason why the use of broadband WLAN systems is at present particularly attractive for the delivery of such multimedia services. The reason is that WLAN systems offer, as described above, potentially the highest transfer rates today. In the future, further broadband radio communication systems with similar or even smaller range will appear. Generally, however, such systems do not cover the whole country. This means that although the technology exists for a broadband transmission of video streams, offering them ubiquitously to the customer still provides serious problems.

It has been suggested to solve this problem of an incomplete geographical access to broadband systems by means of a push & store approach. If a mobile terminal reaches the coverage area of an access point which offers a high data rate, the desired data are transferred with a high download speed to the user. The user stores the data on appropriate storage means. If the terminal leaves the coverage area the stored data can be used even if there is no current transmission of new data to the mobile terminal. The stored data can for example be displayed on the screen until the next access point is reached. This means that the push & store approach is characterized by an intermittent reception of data and a continuous use or display of them.

The same transfer mode may also be used in a heterogeneous radio communication system consisting of a discontinuous coverage by broadband access points (e.g. WLAN) with small cells and overlapping large cells with smaller bandwidth (e.g. UMTS). Even though such a system may offer ubiquitous connection, broadband services will be provided in a push & store manner in which the data will be transferred while the mobile terminal is within the coverage of a broadband access point.

The invention disclosed in US 2004 / 0203779 relates to a wireless communication network such as a CDMA-, PCS- or GSM-network, that provides a continuous coverage. A mobile unit may, by use of for example GPS, periodically determine and communicate its position to base stations of the communication network as the mobile unit moves through the network. In addition the capacity needs of the mobile unit's connection may be communicated expressly by the unit or deduced from the connection itself. A network management system receives the position and capacity information of the mobile unit and then estimates a route of the mobile unit through the network. The network management system may furthermore determine the availability of capacity of base stations along the estimated route through the network. Given this information, the network management system may take one or more of the following actions. First, capacity of each base station along the route may be reserved in anticipation of the mobile unit's arrival into the base station's coverage area. Second, base stations may be selected for hand off along the route and the identity of these base stations communicated to the mobile unit. Third, an alternative route may be communicated to the mobile unit, and that alternative route may include base stations having relatively greater available capacity. Fourth, directions may be provided to the mobile unit to bring the mobile unit closer in position to a base station.

The invention disclosed in EP 1 085 696 relates to a road vehicle communication method using light and radio and which is advantageously applicable to a reservation download type of asymmetric communication system. A road vehicle communication method allows both way communication to be held between a mobile station, which sends a request for an information service and receives it, and a central base station and local base stations located at a roadside for sending the information service to the mobile station. A mobile station is caused to send the request for information service beforehand. In response to the request the local base station carrying the mobile station expected to receive the information service is estimated. Then, when the mobile station lies in a service area to which the local base station estimated is assigned, a control station is caused to provide the mobile station with information corresponding to the information service requested.

The invention disclosed in US 6,188,905 relates to a dynamic channel allocation scheme for a mobile communication network. In particular it relates to a scheme for maintaining uninterrupted service in a mobile network. Service for allocating resources is designed to develop profiles of subscriber's mobility. That is, profiles are developed for routes, travelled by subscribers at certain days and times. For example some subscribers commute to and from work at relatively fixed times. By compiling this information in the profile and tracking the movement of the subscriber, the mobile network can anticipate the subscriber's movement into a next cell. Thus, wireless resources in the next cell can be reserved prior to the anticipated handover of an ongoing call involving the subscriber. Thus, uninterrupted service can be maintained and dropped calls can be avoided. The intelligent allocation of wireless resources can help avoid the problems of dropped calls in a mobile communications network.

The invention disclosed in EP 1 549 096 relates to a telecommunication method for a telecommunication network that provides discontinuous radio coverage. The tele communication network comprises a plurality of cells and the method comprises the step of providing a data stream to a mobile terminal within the coverage of a first one of the plurality of cells and the step of interrupting the data stream when the mobile terminal is moved outside the radio coverage. The method further comprises the step of determining the location of the mobile terminal outside the radio coverage and predicting a second one of the plurality of cells to be the target cell of the mobile terminal. Furthermore the method comprises the step of providing the data stream to a server that is assigned to the second one of the plurality of the cells and the step of resuming the data stream to the mobile terminal when the mobile terminal is within the coverage of the second one of the plurality of the cells.

The key problem in the push & store approach however is the short transit time of a mobile terminal within the coverage area of an access point. In particular when the velocity of the mobile terminal is high, which might be the case in a passenger car travelling on a highway in which the fellow passengers would like to watch a video, the transit time is particularly short with coverage areas having a diameter of less than 300 meters. In this transit time three steps have to be carried out:
a) a communication between the mobile terminal and the communication system has to be established,
b) it has to be determined which data have to be provided for the mobile terminal, and these data have to be transferred to the access point such that the communication system can deliver them to the mobile terminal,
c) the determined data have to be transferred to the mobile terminal.

As can be derived from the explanation given above the steps a) and b) reduce the time during which data are actually transferred to the mobile terminal. This means that in the case of a moving mobile terminal to which a broadband connection should be established the use of the push & store approach is practically impossible in the

### prior art.

### Summary of the invention

It is an object of the present invention to provide a service for a mobile terminal on a push & store basis which uses the transit time of this mobile terminal in the coverage area of a broadband access point more efficiently.

According to the present invention the above-mentioned object is achieved by providing the features defined in the independent claims. Preferred embodiments according to the invention additionally comprise the features defined in the sub-claims. It should be emphasized that any reference signs in the claims shall not be construed as limiting the scope of the invention.

In a first aspect of the invention a method is provided by which a wireless communication system provides a service for a mobile terminal which is moving along a travel route from a starting point to a destination point. In a first step a communication system receives the geographical position of the mobile terminal, said position representing the starting point of the travel route. In a second step the communication system predicts which of its access points has a coverage area which might be reached by the mobile terminal. In a third step a communication system provides the service at the access point determined in the second step prior to the (possible) arrival of the mobile terminal at the coverage area of said access point.

The idea underlying the present invention is that the service should already be available when a mobile terminal reaches the coverage area of an access point. This has the consequence that the step b) mentioned in the introductory part of the description which consists of
i) determining the data due for the mobile terminal, and
ii) sending the data to the access point such that they are transmittable by this access point to the mobile terminal
is done prior to the arrival of the mobile terminal at the access point. In other words steps i) and ii) have already been carried out when the mobile terminal reaches the coverage area of the access point. This has the consequence that a larger part of the transit time can be used for the actual transfer of data. In this way more data can be transferred to the mobile terminal such that the transit time is used more efficiently.

The method disclosed above can be carried out by an arbitrary communication system. As can be derived from the introductory part of the description it is particularly useful for those communication systems which do not cover a whole country, such that data can be received intermittently by the mobile terminal. In this respect the method is particularly useful for but not restricted to WLAN systems for offering broadband services.

A prerequisite for the method described above is that the access point whose coverage area will be reached knows in advance that the mobile terminal is going to arrive. This has either to be communicated to this access point or it has to be predicted.

The geographical positions of the access points are known to the associated communication system. This means that a first possibility to predict which of these access points has a coverage area which might be reached by the mobile terminal consists in choosing access points which are geographically close to the starting point. This is a trial and error approach being applicable when a large part of a country is covered by access points. In other words the distance between adjacent access points is rather small.

Such a situation in which a large part of a country is covered by the access points also offers the possibility that the access points inform each other that a mobile terminal is possibly reaching one (or a few) of them in the future. Each time when a mobile terminal establishes a connection to a new access point the system "sees" the mobile terminal at the location of the associated access point. Then the mobile terminal moves along its travel route and establishes a new connection at a new location. The new location is known to the communication system as well as the system knows where its access points are located. This allows the system to track the movement of the mobile terminal while this is moving from the starting point along a certain travel route to an unknown destination point. The communication system can compare the direction of the movement of the mobile terminal with the locations of other access points in order to predict which access point might be reached in the future (called candidates). Correspondingly, an access points reached in the past can inform the candidates of the arrival of the mobile terminal. Furthermore, they can inform the candidates which data are needed by the mobile terminal.

According to a preferred embodiment of the invention the mobile terminal not only communicates or transmits the geographical position of the starting point to the communication system, but also the geographical position of the destination point. In this way the communication system has a certain directional information which allows an extrapolation or prediction of the future travel route and thus of access points which might be reached in the future. Although this might only be a crude estimate it reduces the number of access points which have to be ready, i.e. which will have the data available for the mobile terminal. This in turn reduces the overhead in the data transmission and ensures that the bandwidth is used more efficiently.

In a further preferred embodiment the communication system also receives the geographical positions of further locations reached by the mobile terminal along the travel route. This allows a more precise tracking of the travel route and a more precise determination of the access points which might be reached in the future. In order to transmit this information the mobile terminal may use a location determination means such as a GPS (Global Positioning System) system or its future European equivalent, namely the Galileo system.

It is even more favourable when the communication system knows exactly during the journey of the mobile terminal where it is located. This can be ensured by communicating the travel route to the communication system. This is done by the mobile terminal. In this case the number of access points which must be ready to deliver data to the mobile terminal on the push and store basis is reduced to a minimum and the overhead as well. In the first place it is possible to communicate this travel route once, in particular at the beginning of the journey. It is however even better when this travel route is updated each time when the travel route changes.

Communicating a travel route from the mobile terminal to the communication system requires that the mobile terminal is equipped with a route planner. Such route planners are commonplace nowadays and represent a computer program product which is more and more a standard components in new cars.

In another preferred embodiment of the invention the travel route is not determined by the route planner of the mobile terminal mentioned above but by the communication system. In this case the communication system offers the service of a route planner to the mobile terminal. The communication system calculates the travel route and communicates it to the mobile terminal. This has the advantage that the route planner will always be up to date. Furthermore, when calculating the travel route the communication system can easily take traffic information into account, for example information concerning traffic jams or blocked streets, something which is not always possible in the case of route planners installed in vehicles.

The method which has been described above requires that certain geographical information is communicated to the communication system. This information is used to predict which access point will be reached in the future. The management of the communication system is however easier if the time of arrival of this mobile terminal is also known to the access point.

Accordingly, another aspect of the invention is that the communication system is adapted to predict at which time the terminal is going to reach the coverage area of the access point. This makes sure that the data required by the mobile terminal are really available when the mobile terminal arrives. This avoids situations in which the bandwidth offered by the communication system is not sufficient to provide the required data in due time.

In the simplest case the average velocity of a mobile terminal is used for predicting the time of arrival. This average velocity may be derived from the route planner itself, or from tachometer readings. The time of arrival can be estimated in a more refined way when the type of road is taken into account, when the velocity being allowed on this particular road is considered, when the phases of traffic lights or when the decisions of traffic guiding systems are taken into account. In the latter case of traffic guiding systems an estimation can be derived about congested roads or even blocked roads, information which is, of course, also helpful for predicting which access point will be reached geographically by a mobile terminal without performing a temporal prediction.

In another aspect of the invention the access point receives information concerning the identity of the terminal which is going to reach its coverage area. In this case the access point can prepare the connection between the mobile terminal and the access point. This makes it possible to reduce or shorten the time interval a) mentioned in the introductory part of the description. In other words less time is needed for establishing a connection which can be realized by an abbreviated handshake procedure. As a consequence the transit time of the mobile terminal is used more efficiently.

The method disclosed above is carried out by a communication system, for example by a WLAN system. According to another aspect of the invention a corresponding method is disclosed which is carried out by the mobile terminal. This method is a method for guiding a mobile terminal along a travel route from the starting point to a destination. The geographical position of the starting point and of the destination point is transmitted by the mobile terminal to a communication system. Transmitting the starting point can be done when the mobile terminal/the route planner is switched on. As a response the mobile terminal receives the travel route from the communication system and travels accordingly.

Guiding a mobile terminal along a travel route is done in the same way as a conventional route planner: informing the user, namely the driver of a lorry or a car, about where he has to drive in order to reach his destination point.

The use of the method by the users and their comfort is increased when inputting the destination point can be done orally by appropriate speech recognition means.

It goes without saying that the above-mentioned method being performed by the mobile terminal can be carried out by means of a computer by using appropriate computer program product means which represent a part of a mobile terminal itself.

### Brief description of the drawings

In the following various embodiments of the invention will be described in greater detail by making reference to the drawings in which:
- Figure 1: shows a country and a travel route of a mobile terminal within that country,
- Figure 2: illustrates the situation when the mobile terminal approaches an access point and its coverage area.

### Detailed description of the drawings and of the preferred embodiments

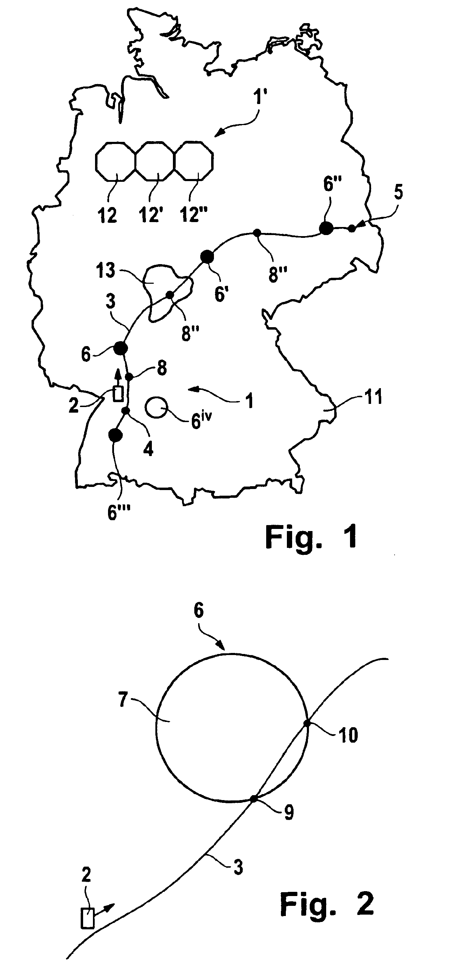

Figure 1 shows a country 11 with an heterogeneous network architecture. A country is covered by a first communication system 1' which is a GSM system. This GSM system has a cell-like structure which is indicated by three cells 12, 12', and 12". For simplicity only three cells are shown.

Furthermore the country 11 has a second communication system 1 of which only a few access points are shown in figure 1. They comprise the access points 6, 6', 6", 6"', 6^{iv}. Each access point is represented by a small circle indicating the small coverage area of such an access point. However, the circles are exaggerated in size, such that the size of the circles is not to scale with the size of the country.

The access points are hot spots of a WLAN system. As can be derived from the simplified figure 1 the hot spots of this WLAN system 1 are scattered around the country. In other words the hot spots 6, 6', 6", 6"', 6^{iv} of the WLAN system 1 do not cover the whole country 11.

In a first embodiment a mobile terminal 2, namely a passenger car, comprises a route planner and is going to move from the starting point 4 to a destination point 5 via the travel route 3. When the car 2 starts at the starting point 4 the terminal is switched on. At the same time the route planner starts to operate. The mobile terminal 2 comprises a GPS system (not shown) which identifies the present geographical position and transmits it to the communication system 1.

The mobile terminal 2 has two possibilities for communicating the present location to the communication system 1. A first possibility is the use of a direct transmission to the communication system 1. This is possible if the starting point is located within the coverage area of a hot spot of said communication system. In the case shown in figure 1 this is not the case. Instead, the geographical position is communicated to the communication system 1', which itself transmit the information to the communication system 1.

With this information the WLAN system 1 predicts which of its access points has a coverage area which might be reached by the mobile terminal. For that purpose it is taken into account that the access points 6'" and 6^{iv} are closest to the starting point 4 of the mobile terminal. Correspondingly the WLAN system 1 ensures that these two hot spots 6'" and 6^{iv} have all necessary data available.

As can be seen from figure 1 the prediction of the last paragraph was wrong. The car takes the travel route 3 which passes further locations 8, 8' and 8" until it reaches the destination point 5. All these locations are continuously transferred to the WLAN system 1.

In a second embodiment the WLAN system 1 receives the travelling route 3 from the mobile terminal 2. Thus the travel route 3 is calculated by the WLAN system 1 and is communicated to the mobile terminal 2.

It is possible for the WLAN system 1 to calculate the travel route 3 and taking into account that the car is going to reach a metropolitan area 13. The metropolitan area 13 has a traffic guiding system providing information about optimal routes. This information is used by the WLAN system 1 when calculating the travel route 3 for the mobile terminal 2 in the car. In this way the recommendations given by the traffic guiding system are taken into account which optimizes the travel route, for example by using bypasses and not congested inner roads.

Figure 2 shows the situation when a mobile terminal 2 approaches the coverage area 7 of the access point 6. The access point 6 is ready and anticipates that mobile terminal 2 will approach its coverage area 7. It has all data for him available. At the point of entry 9 an abbreviated handshake procedure takes place which makes it possible that more or less in the moment of reaching point 9 a download of a portion of a video is performed until the exit point 10 is reached. After leaving the coverage area 7 of access point 6 the car follows the travel route 3 as shown. More data are received in this way when travelling through the coverage areas of access points 6' and 6" until the destination point 5 is reached.

### List of Reference Numerals

- 01: communication system
- 01': communication system
- 02: mobile terminal
- 03: travel route
- 04: starting point
- 05: destination point
- 06: access point
- 06': access point
- 06": access point
- 06"': access point
- 06^{iv}: access point
- 07: coverage area
- 08: location
- 08': location
- 08": location
- 09: point of entry
- 10: exit point
- 11: country
- 12: cell
- 12': cell
- 12": cell
- 13: metropolitan area

## Claims

1. Method by which a wireless communication system (1) provides a service for a mobile terminal (2) while this mobile terminal is moving along a travel route (3) from a starting point (4) to a destination point (5), wherein said wireless communication system (1) has a discontinuous coverage along said travel route (3), and whereby the communication system carries out the following steps:
a) receiving the geographical position of the starting point (4) of the mobile terminal and the geographical position of the destination point (5),
b) predicting which of its access points (6,6',6",6"',6^{iv}) has a coverage area (7) which might be reached by the terminal,
c) sending data for providing the service to this access point prior to the arrival of the mobile terminal,
wherein the communication system calculates the travel route of the mobile terminal and communicates it to the mobile terminal.

2. Method according to claim 1,
**characterized in that**
the communication system receives the geographical position of further locations (8,8',8") reached by the terminal along the travel route.

3. Method according to claim 1,
**characterized in that**
the communication system receives the travel route of the terminal.

4. Method according to claim 1,
**characterized in that**
the access point receives information concerning the identity of the mobile terminal which is going to reach its coverage area.

5. Method according to claim 1,
**characterized In that**
for the prediction of the time of arrival the velocity of the mobile terminal, the acceleration of the mobile terminal, information concerning the traffic load, and/or information concerning the phases of traffic lights or from a system for guiding the traffic are taken into account.

6. Computer program product, directly loadable in the internal memory of a digital computer, comprising software code portions for performing the method according to any of the claims 1 to 5 when said product is running on a computer.

7. Wireless communication system, said wireless communication system comprising means for performing the method according to any one of the claims 1 to 5.

## Patentansprüche

1. Verfahren, mit welchem ein drahtloses Kommunikationssystem (1) einen Dienst an ein mobiles Endgerät (2) bereitstellt, während sich dieses mobile Endgerät entlang einer Reiseroute (3) von einem Ausgangspunkt (4) zu einem Zielpunkt (5) bewegt, wobei die Abdeckung des besagten drahtlosen Kommunikationssystems (1) entlang der besagten Reiseroute (3) diskontinuierlich ist, und wobei das Kommunikationssystem die folgenden Schritte durchführt:
a) Empfangen der geografischen Position des Ausgangspunktes (4) des mobilen Endgeräts und der geografischen Position des Zielpunktes (5),
b) Vorhersagen, welcher seiner Zugangspunkte (6,6',6",6"'_{,}6^{iv}) einen von dem Endgerät erreichbaren Abdeckungsbereich bietet,
b) Senden von Daten zum Bereitstellen des Dienstes an diesen Zugangspunkt vor Ankunft des mobilen Endgeräts,
wobei das Kommunikationssystem die Reiseroute des mobilen Endgeräts kalkuliert und an das mobile Endgerät übermittelt.

2. Verfahren nach Anspruch 1,
**dadurch gekennzeichnet, dass**
das Kommunikationssystem die geografische Position von weiteren von dem Endgerät entlang der Reiseroute erreichten Standorten (8,8',8") empfängt.

3. Verfahren nach Anspruch 1,
**dadurch gekennzeichnet, dass**
das Kommunikationssystem die Reiseroute des Endgeräts empfängt.

4. Verfahren nach Anspruch 1,
**dadurch gekennzeichnet, dass**
der Zugangspunkt Informationen über die Identität des mobilen Endgeräts, welches im Begriff ist, seinen Abdeckungsbereich zu erreichen, empfängt.

5. Verfahren nach Anspruch 1,
**dadurch gekennzeichnet, dass**
für die Vorhersage der Ankunftszeit die Geschwindigkeit des mobilen Endgeräts, die Beschleunigung des mobilen Endgeräts, Informationen über die Verkehrslast und/oder Informationen über die Phasen der Verkehrsampeln oder von einem Verkehrssteuerungssystem berücksichtigt werden.

6. Computerprogramm-Produkt, welches direkt in den internen Speicher eines digitalen Computers geladen werden kann, mit Software-Code-Abschnitten zum Durchführen des Verfahrens gemäß einem beliebigen der Ansprüche 1 bis 5, wenn das besagte Produkt auf einem Computer läuft.

7. Drahtloses Kommunikationssystem, wobei das besagte drahtlose Kommunikationssystem Mittel zum Durchführen des Verfahrens gemäß einem beliebigen der Ansprüche 1 bis 5 umfasst.

## Revendications

1. Procédé par lequel un système de communication sans fil (1) fournit un service pour un terminal mobile (2) alors que ce terminal mobile se déplace le long d'un itinéraire de déplacement (3) entre un point de départ (4) et un point d'arrivée (5), dans lequel ledit système de communication sans fil (1) présente une couverture discontinue le long dudit itinéraire de déplacement (3), le système de communication exécutant les étapes suivantes :
a) recevoir la position géographique du point de départ (4) du terminal mobile et la position géographique du point d'arrivée (5),
b) prévoir lequel de ses points d'accès (6,6',6",6'",6^{IV}) présente une zone de couverture (7) qui peut être atteinte par le terminal,
c) envoyer des données pour fournir le service à ce point d'accès avant l'arrivée du terminal mobile,
dans lequel le système de communication calcule l'itinéraire de déplacement du terminal mobile et le communique au terminal mobile.

2. Procédé selon la revendication 1,
**caractérisé en ce que**
le système de communication reçoit la position géographique d'autres emplacements (8,8',8") atteints par le terminal le long de l'itinéraire de déplacement.

3. Procédé selon la revendication 1,
**caractérisé en ce que**
le système de communication reçoit l'itinéraire de déplacement du terminal.

4. Procédé selon la revendication 1,
**caractérisé en ce que**
le point d'accès reçoit des informations concernant l'identité du terminal mobile qui va atteindre sa zone de couverture.

5. Procédé selon la revendication 1,
**caractérisé en ce que**
pour la prédiction du temps d'arrivée, la vitesse du terminal mobile, l'accélération du terminal mobile, les informations concernant la charge de trafic et/ou les informations concernant les phases de feux de circulation ou d'un système de guidage du trafic sont prises en compte.

6. Produit de programme informatique, qui peut être chargé directement dans la mémoire interne d'un calculateur numérique, comprenant des parties de code logiciel pour exécuter le procédé selon l'une quelconque des revendications 1 à 5 lorsque ledit produit est exécuté sur un ordinateur.

7. Système de communication sans fil, ledit système de communication sans fil comprenant des moyens pour exécuter le procédé selon l'une quelconque des revendications 1 à 5.
